(19) **Europäisches Patentamt / European Patent Office / Office européen des brevets**

(11) **EP 4 564 269 A1**

(12) # EUROPEAN PATENT APPLICATION
published in accordance with Art. 153(4) EPC

(43) Date of publication:
**04.06.2025 Bulletin 2025/23**

(21) Application number: **23856489.2**

(22) Date of filing: **11.08.2023**

(51) International Patent Classification (IPC):
**G06Q 30/02** (2023.01)     **G06Q 10/083** (2024.01)

(86) International application number:
**PCT/CN2023/112558**

(87) International publication number:
**WO 2024/041399 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.08.2022   CN 202211014877**

(71) Applicant: **Travelsky Technology Limited Beijing 101318 (CN)**

(72) Inventors:
- **LIU, Hui**
  **Beijing 101318 (CN)**
- **LI, Liang**
  **Beijing 101318 (CN)**
- **YAN, Songbai**
  **Beijing 101318 (CN)**
- **ZHU, Xianhao**
  **Beijing 101318 (CN)**
- **WANG, Xinhong**
  **Beijing 101318 (CN)**
- **SHI, Xiaofei**
  **Beijing 101318 (CN)**
- **LIU, Jiarui**
  **Beijing 101318 (CN)**
- **GUO, Hua**
  **Beijing 101318 (CN)**

(74) Representative: **Penza, Giancarlo**
**Bugnion S.p.A.**
**Viale Lancetti, 17**
**20158 Milano (IT)**

(54) **DATA PROCESSING METHOD AND SYSTEM, ELECTRONIC DEVICE, AND COMPUTER STORAGE MEDIUM**

(57)   The present invention provides a data processing method and system, an electronic device, and a computer storage medium. The method includes: determining freight-rate data corresponding to each freight-rate product by processing a freight-rate data set and product basic information in a freight-rate system; for the freight-rate data of each freight-rate product and a rule corresponding to the freight-rate data, analyzing the freight-rate data of the freight-rate product, to determine values of each feature of the freight-rate product; determining a value satisfying a preset threshold based on the values of each feature; taking a feature corresponding to the value satisfying the preset threshold as a decision feature; determining freight-rate products of the same product type; and generating analysis reports corresponding to the freight-rate products of the same product type by processing a feature set of all the freight-rate products of the same product type and the freight-rate data of all the freight-rate products of the same product type. The method can complete data processing within a specified time, thereby increasing the speed of processing and analysis speed, and enabling accurate data analysis.

**EP 4 564 269 A1**

Determine freight-rate data corresponding to each freight-rate product by processing a freight-rate data set and product basic information in a freight-rate system — S201

For the freight-rate data of each freight-rate product and rules corresponding to the freight-rate data, analyze the freight-rate data of the freight-rate product, to determine values of each feature of the freight-rate product — S202

Based on the values of each feature, determine whether a value satisfying the preset threshold exists — S203

Yes

Take a feature corresponding to the value satisfying the preset threshold as a decision feature — S204

Determine freight-rate products of the same product type, and aggregate the freight-rate products of the same product type — S205

generate analysis reports corresponding to the freight-rate products of the same product type by processing a feature set of all the freight-rate products of the same product type and the freight-rate data of all the freight-rate products of the same product type — S206

Fig. 2

**Description**

This invention claims priority to Chinese Patent Application No. 202211014877.7, filed on August 23, 2022 and entitled "Data Processing Method and System, Electronic Device, and Computer Storage Medium", the invention of which is hereby incorporated by reference in its entirety.

**Technical Field**

The present invention relates to the technical field of data processing, and in particular, to a data processing method and system, an electronic device, and a computer storage medium.

**Background**

With the rapid development of aviation service business, air ticket business is developing rapidly. In response to market changes under the current epidemic situation, airlines need to frequently adjust formulation and sales strategies of freight-rate products. Therefore, existing freight-rate data needs to be analyzed.

At present, the freight-rate data is often analyzed and combined manually to describe the freight-rate product comprehensively and accurately, and an association between functional points needs to be considered, which may be described as a mesh function structure of "a slight move in one part may affect the situation as a whole". As a result, the manual processing and analysis speed is relatively slow and data confusion is prone to occur.

**Summary**

In view of this, embodiments of the present invention provide a data processing method and system, an electronic device, and a computer storage medium, to solve the problems in the related art that the processing and analysis speed is relatively slow and data confusion is prone to occur.

In order to achieve the above objectives, the embodiments of the present invention provide the following solutions.

A first aspect of the embodiments of the present invention shows a data processing method, the data processing method including:

determining freight-rate data corresponding to each freight-rate product by processing a freight-rate data set and product basic information in a freight-rate system, where the product basic information includes a product definition and product attributes;

for the freight-rate data of each freight-rate product and rules corresponding to the freight-rate data, analyzing the freight-rate data of the freight-rate product to determine values of each feature of the freight-rate product;

determining a value satisfying a preset threshold based on the values of each feature;

taking a feature corresponding to the value satisfying the preset threshold as a decision feature;

determining freight-rate products of the same product type, and aggregating the freight-rate products of the same product type;

generating analysis reports corresponding to the freight-rate products of the same product type by processing a feature set of all the freight-rate products of the same product type and the freight-rate data of all the freight-rate products of the same product type.

In an embodiment, the determining freight-rate data corresponding to each freight-rate product by processing a freight-rate data set and product basic information in a freight-rate system includes:

tagging a product label of each piece of freight-rate data in the freight-rate data set based on a field of a product definition in the product basic information;

determining the freight-rate data corresponding to each freight-rate product by performing classification processing on each piece of freight-rate data in the freight-rate data set based on the product label and the product attributes of the product basic information.

In an embodiment, the determining the freight-rate data corresponding to each freight-rate product by performing classification processing on each piece of freight-rate data in the freight-rate data set based on the product label and the product attributes of the product basic information includes:

for the freight-rate data of each freight-rate product, acquiring a feature of the freight-rate product based on the freight-rate data of the freight-rate product and the rule corresponding to the freight-rate data, wherein the number of the feature is at least one;

determining a quantity set of each value range of the feature based on a value range of the feature;

calculating the quantity set of each value range of the feature to obtain the values of each feature of the freight-rate product.

In an embodiment, the determining a value satisfying a preset threshold based on the values of each feature includes:

determining whether a value greater than or equal to the preset threshold exists in values of each feature;

when the value greater than or equal to the preset threshold exists in the values of each feature, executing the step that the feature corresponding to the value satisfying the preset threshold is taken as the decision feature.

In an embodiment, the determining freight-rate products of the same product type, and aggregating the freight-rate products of the same product type are aggregated includes:

comparing each decision feature of each freight-rate product, and when freight-rate products with the same decision features exist, taking the freight-rate products with the same decision features as the freight-rate products of the same product type;

aggregating the freight-rate products of the same product type.

A second aspect of the embodiments of the present invention shows a data processing system by processing a freight-rate data set and product basic information in a freight-rate system, which includes a product classification assembly, a feature extraction assembly, a product clustering assembly, and a business model analysis assembly.

The product classification assembly is configured to determine freight-rate data corresponding to each freight-rate product, where the product basic information includes a product definition and product attributes.

The feature extraction assembly is configured to, for the freight-rate data of each freight-rate product and a rule corresponding to the freight-rate data, analyze the freight-rate data of the freight-rate product, to determine values of each feature of the freight-rate product; determine a value satisfying a preset threshold based on the values of each feature; and take a feature corresponding to the value satisfying the preset threshold as a decision feature.

The product clustering assembly is configured to determine freight-rate products of the same product type, and aggregate the freight-rate products of the same product type.

The business model analysis assembly is configured to generate analysis reports corresponding to the freight-rate products by processing a feature set of all the freight-rate products of the same product type and the freight-rate data of all the freight-rate products of the same product type.

In an embodiment, the product classification assembly includes a product marking module, a product grouping module, and a product family construction module.

The product marking module is configured to tag a product label of each piece of freight-rate data in the freight-rate data set based on a field of a product definition in the product basic information.

The product grouping module and the product family construction module are configured to determine the freight-rate data corresponding to each freight-rate product by performing classification processing on each piece of freight-rate data in the freight-rate data set based on the product label and the product attributes of the product basic information.

In an embodiment, the product clustering assembly includes a feature matching module and a product merging module.

The feature matching module is configured to compare each decision feature of each freight-rate product, and when the freight-rate products with the same decision features exist, take the freight-rate products with the same decision features as the freight-rate products of the same product type.

The product merging module is configured to aggregate the freight-rate products of the same product type.

A third aspect of the embodiments of the present invention shows an electronic device, configured to run a program. The program, when running, performs any one of the data processing methods shown in the first aspect of the embodiments of the present invention.

A fourth aspect of the embodiments of the present invention shows a computer storage medium, which includes a stored program. The program, when running, controls a device where the storage medium is located to perform any one of the data processing methods shown in the first aspect of the embodiments of the present invention.

Based on the data processing method and system, the electronic device, and the computer storage medium provided by the embodiments of the present invention, the method includes that: the freight-rate data set and the product basic information in the freight-rate system are processed, and the freight-rate data corresponding to each freight-rate product is determined, where the product basic information includes the product definition and the product attributes; for the freight-rate data of each freight-rate product and a rule corresponding to the freight-rate data, the freight-rate data of the freight-rate product is analyzed and the values of each feature of the freight-rate product is determined; a value satisfying the preset threshold is determined based on the values of each feature; a feature corresponding to the value satisfying the preset threshold is taken as the decision feature; freight-rate products of the same product type are determined, and the freight-rate products of the same product type are aggregated; and the feature set of all the freight-rate products of the same product type and the freight-rate data of all the freight-rate products of the same product type are processed to generate the analysis reports corresponding to the freight-rate products of the same product type. In the embodiments of the present invention, decision features of different freight-rate products are calculated from data in a training set such as the freight-rate data set by feature extraction in pattern recognition; and the freight-rate products of the same product type are determined, and the freight-rate products of the same product type are aggregated. Therefore, key functional points of the freight-rate products of different product types and potential business intentions of the freight-rate product definitions are analyzed. The method can complete data processing within a specified time, thereby increasing the speed of processing and analysis, and enabling accurate data analysis.

## Brief Description of the Drawings

In order to more clearly illustrate the embodiments of the present invention or the solutions in the related art, the drawings used in the description of the embodiments or the related art will be briefly described below. It is apparent that the drawings described below are only embodiments of the present invention. Other drawings may further be obtained by those of ordinary skill in the art according to these drawings without creative efforts.

Fig. 1 is a schematic structural diagram of a data processing system according to an embodiment of the present invention.

Fig. 2 is a flowchart of a data processing method according to an embodiment of the present invention.

## Detailed Description of the Embodiments

The solutions in the embodiments of the present invention will be clearly and completely described in conjunction with the drawings in the embodiments of the present invention. It is apparent that the described embodiments are only a part of the embodiments of the present invention, and not all of them. All other embodiments obtained by those of ordinary skill in the art based on the embodiments of the present invention without creative efforts are within the scope of protection of the present invention.

Terms "first", "second", "third", "fourth" and the like in the specification, claims and the above drawings of the present invention are configured to distinguish similar objects rather than describing a sequence or a precedence order. It should be understood that the data used in this way are interchangeable under appropriate circumstances, so that the embodiments described herein may be implemented in an order other than those illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

It is to be noted that, "first", "second", and the like involved in the present invention are configured to descriptive purposes only, and cannot be understood as indicating or implying relative importance or implicitly indicating the number of indicated technical features. Therefore, the features defined with "first" and "second" may explicitly or implicitly include at least one of the features. In addition, the solutions between the various embodiments may be combined with each other, but must be realized by those of ordinary skill in the art, and when the combination of the technical solutions is contradictory or may not be realized, it should be considered that the combination of the technical solutions does not exist and is not within the scope of protection claimed in the present invention.

In the present invention, terms "include" and "contain" or any other variant thereof is intended to cover nonexclusive inclusions herein, so that a process, method, object or device including a series of elements not only includes those elements but also includes other elements which are not clearly listed or further includes elements intrinsic to the process, the method, the object or the device. Under the condition of no more limitations, an element defined by the statement "including a/an......" does not exclude existence of the same other elements in a process, method, object or device including the element.

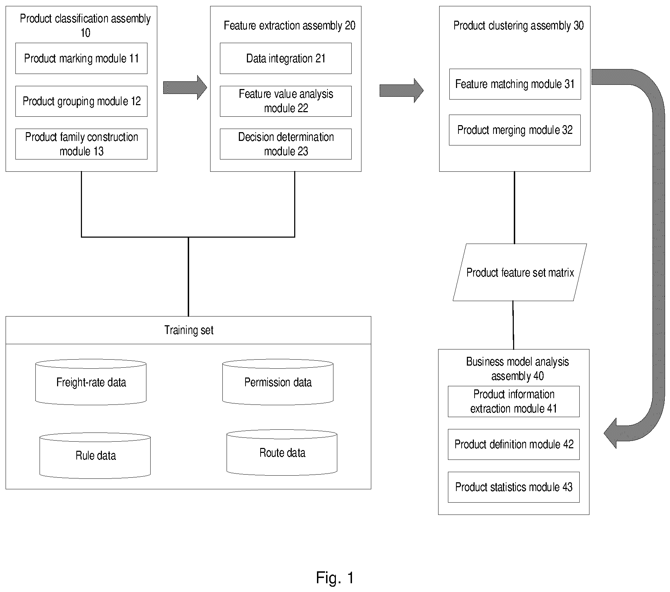

Referring to Fig. 1, which is a schematic structural diagram of a data processing system according to an embodiment of the present invention. The system includes a product classification assembly 10, a feature extraction assembly 20, a product clustering assembly 30, and a business model analysis assembly 40.

The product classification assembly 10 is connected to the feature extraction assembly 20, the feature extraction assembly 20 is connected to the product clustering assembly 30, and the product clustering assembly 30 is connected to the business model analysis assembly 40.

The product classification assembly 10 and the feature extraction assembly 20 are further connected to a training set, i.e., a database.

The training set is mainly configured to store freight-rate data, permission data, rule data, and route data.

Wherein, the freight-rate data defines what to sell and how much to sell, mainly involving dimensions such as an airline, a sales time range, an origin, a destination, a shipping space, a price, and a freight-rate basis. The permission data defines who to sell, mainly involving dimensions such as a channel, a group, a terminal configuration, and an agent account. The rule data and the route data define how to sell, to whom, and when to sell, involving dimensions such as a passenger Identity (ID), a sales week, a combination condition, a flight, a transfer point, a stopover point, and the shipping space.

The product classification assembly 10 is configured to determine freight-rate data corresponding to each freight-rate product by processing a freight-rate data set and product basic information in a freight-rate system, where the product basic information includes a product definition and product attributes.

Wherein, the product classification assembly 10 includes a product marking module 11, a product grouping module 12, and a product family construction module 13.

The product marking module 11 is configured to tag a product label of each piece of freight-rate data in the freight-rate data set based on a field of a product definition in the product basic information. Next, the product grouping module 12 and the product family construction module 13 is configured to determine the freight-rate data corresponding to each freight-rate product by performing classification processing on each piece of freight-rate data in the freight-rate data set based on the product label and the product attributes of the product basic information.

In an embodiment, the product marking module 11 first acquires the freight-rate data set of the freight-rate system, as well as the product definition and the product attributes related to the freight-rate product from the prepared training set, i.e., the database, analyzes the freight-rate data set, and tags the product label of each piece of freight-rate data based on the field of the product definition. The product grouping module 12 and the product family construction module 13 perform product classification processing on the freight-rate data based on the product label. In an embodiment, the freight-rate data with the same product label of the freight-rate product is divided into a group, that is, the freight-rate data with the same product label is taken as the freight-rate data of the freight-rate product, and so on until the freight-rate data corresponding to each freight-rate product is determined, that is, all products containing the freight-rate data are classified into a product family of the airline based on the attributes of the airline publishing the freight rate.

It is to be noted that the freight-rate data set includes a plurality of pieces of freight-rate data, the freight-rate data consists of data such as an identifier ID, an airline name, a sales department, an agreement number of the freight-rate product, the origin, the destination, and the air ticket price.

The freight-rate data set refers to the freight-rate data of the freight-rate system of the same airline.

The product label corresponds to the product definition, and the product definition is written based on the theoretical basis of the freight-rate product.

The feature extraction assembly 20 is configured to, for the freight-rate data of each freight-rate product and a rule corresponding to the freight-rate data, analyze the freight-rate data of the freight-rate product, to determine values of each feature of the freight-rate product; determine a value satisfying a preset threshold based on the values of each feature; and take a feature corresponding to the value satisfying the preset threshold as a decision feature.

The feature extraction assembly 20 includes a data integration 21, a feature value analysis module 22, and a decision determination module 23.

For the freight-rate data of each freight-rate product, the decision determination module 23 acquires a feature of the freight-rate product based on the freight-rate data of the freight-rate product and the rule corresponding to the freight-rate data, where the number of features is at least one. The data integration 21 determines a quantity set of each value range of the feature based on a value range of the feature. The feature value analysis module 22 calculates the quantity set of each value range of the feature to obtain the values of each feature of the freight-rate product. Based on the values of each feature, it is determined whether the value satisfying the preset threshold exists, and when it is determined that the value satisfying the preset threshold exists, the feature corresponding to the value satisfying the preset threshold is taken as the decision feature.

In an embodiment, the decision determination module 23 first acquires the rule corresponding to the freight-rate data in the rule data from the prepared training set, i.e., the database, associates the freight-rate data with the corresponding rule, and acquires the feature of the freight-rate product from the freight-rate data and the rules corresponding to the freight-rate data. The data integration 21 determines the value range and cardinality of each feature of the freight-rate product based on the number of values of each feature of the freight-rate product, combines the freight-rate product, the corresponding feature, and the value range to form relevant data volumes, calculates the number of data volumes, and determines the quantity set corresponding to each value range of the feature of the freight-rate product. The feature value analysis module 22 first calculates a standard deviation $\sigma_{ij}$ of the quantity set $Z_{ij}$ of each value range of the feature, substitutes the standard deviation $\sigma_{ij}$ and the quantity set $Z_{ij}$ of each value range of the feature into formula (1), and calculates the value $\tau_{ij}$ of each feature $f_j$ of the freight-rate product $S_i$. It is determined whether a value greater than or equal to the preset threshold exists in the values of each feature, that is, each valuable feature is screened out from each feature, and each valuable feature screened out is taken as the decision feature.

Formula (1):

$$\tau_{ij} = \left( \sum_{l=1}^{L} \Delta_{ijl} \times \sqrt{submax(Z_{ij})} \right) / \left( \sigma_{ij} \times \sqrt{max(Z_{ij})} \right) \tag{1}$$

Wherein $\tau_{ij}$ is the values of each feature $f_j$ of the freight-rate product $S_i$, L is the cardinality of the value range, $max(Z_{ij})$ is the maximum value of $Z_{ij}$, and $submax(Z_{ij})$ is the second largest value of $Z_{ij}$.

It is to be noted that when $\sigma_{ij}=0$, it indicates that the feature $f_j$ of the freight-rate product $S_i$ can group the data evenly, and the value thereof is set to the maximum value MaxValue. When $|D_{ij}|=1$, the feature $f_j$ of the freight-rate product $S_i$ has only one value and has no grouping ability, and the value thereof is set to 0.

The product clustering assembly 30 is configured to determine the freight-rate products of the same product type, and aggregate the freight-rate products of the same product type.

In an embodiment, the product clustering assembly 30 includes a feature matching module 31 and a product merging module 32.

The feature matching module 31 compares each decision feature of each freight-rate product, and when the freight-rate products with the same decision features exist, takes the freight-rate products with the same decision features as the freight-rate products of the same product type. Next, the product merging module 32 aggregates the freight-rate products of the same product type.

In an embodiment, the feature matching module 31 compares and matches the decision features of all the freight-rate products within the same airline, and merges the freight-rate products with the same decision features into one product type. Next, the product merging module 32 aggregates the freight-rate products merged into the same product type, so that there are a plurality of freight-rate products of the product type and the freight-rate data of the freight-rate products.

In an embodiment, after the freight-rate products of the same product type are aggregated, a product feature set matrix may be generated based on the product type and the decision feature thereof.

It is to be noted that the product feature set matrix means that different product types involve different feature sets, so that the product feature set matrix contains different product types and their corresponding different feature sets.

The business model analysis assembly 40 is configured to process a feature set of all the freight-rate products of the same product type and the freight-rate data of all the freight-rate products of the same product type to generate analysis reports corresponding to the freight-rate products of the same product type.

The business model analysis assembly 40 includes a product information extraction module 41, a product definition module 42, and a product statistics module 43.

In an embodiment, the product information extraction module 41 analyzes an origin and a destination of each piece of freight-rate data of the same product type. The product statistics module 43 counts the origin and the destination with a high proportion in the product type, i.e., a popular route. The product definition module 42 determines a popular route product definition mode based on the decision features of all the freight-rate products of the product type, and then generates the corresponding analysis report of the freight-rate product, so that the airline can quickly adjust the route and the freight-rate data.

In the embodiments of the present invention, the decision features of different freight-rate products are calculated from data in the training set such as the freight-rate data set by feature extraction in pattern recognition; and the freight-rate products of the same product type are determined, and the freight-rate products of the same product type are aggregated. Therefore, key functional points of the freight-rate products of different product types and potential business intentions of the freight-rate product definitions are analyzed. The method can complete data processing within a specified time, thereby increasing the speed of processing and analysis, and enabling accurate perform data analysis.

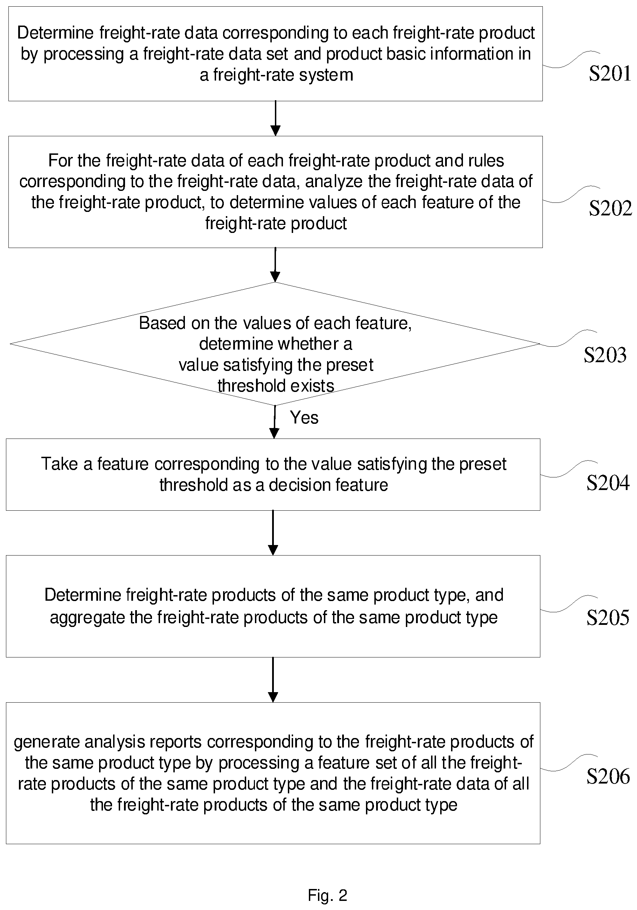

Based on the data processing system shown in the above embodiment of the present invention, the embodiment of the present invention further shows a data processing method. As shown in Fig. 2, which is a flowchart of a data processing method according to an embodiment of the present invention, the method includes the following operations.

At step of S201, determining freight-rate data corresponding to each freight-rate product by processing a freight-rate data set and product basic information in a freight-rate system.

In the step of S201, the product basic information includes a product definition and product attributes.

It is to be noted that the implementation process of S201 includes the following steps.

At step of S11, tagging a product label of each piece of freight-rate data in the freight-rate data set based on a field of a product definition in the product basic information.

In the implementation process of the step of S11, the freight-rate data set of the freight-rate system, as well as the product definition and the product attributes related to the freight-rate product are first acquired from a prepared training set, i.e., a database, the freight-rate data set is analyzed, and the product label of each piece of freight-rate data is tagged based on the field of the product definition.

It is to be noted that the freight-rate data set includes a plurality of pieces of freight-rate data, composed of data such as an identifier ID, an airline name, a sales department, an agreement number of the freight-rate product, an origin, a destination, and an air ticket price.

The freight-rate data set refers to the freight-rate data of the freight-rate system of the same airline.

At step of S12, determining the freight-rate data corresponding to each freight-rate product by performing classification processing on each piece of freight-rate data in the freight-rate data set based on the product label and the product attributes of the product basic information.

In the implementation process of the step of S12, firstly, product classification processing is performed on the freight-rate data according to the product label. In an embodiment, the freight-rate data with the same product label of the freight-rate product is divided into a group, that is, the freight-rate data with the same product label is taken as the freight-rate data of the freight-rate product, and so on until the freight-rate data corresponding to each freight-rate product is determined.

It is to be noted that the product label corresponds to the product definition, and the product definition is written based on the theoretical basis of the freight-rate product.

For example, Table (1) includes twelve freight-rate data sets A, and the identifier ID, the airline name, the sales department, the agreement number, the origin, the destination, and the air ticket price of the freight-rate data sets A are as shown in Table (1). The freight-rate data set A is analyzed, and the product label of each piece of freight-rate data is tagged based on the field of the product definition. For example, the freight-rate data of the freight-rate product with the agreement number F21052114 is tagged as "1", that is, the product label of the freight-rate data with the agreement number F21052114 is "1"; the freight-rate data of the freight-rate product with the agreement number CA080516H is tagged as "2", that is, the product label of the freight-rate data with the agreement number CA080516H is "2"; and the freight-rate data of the freight-rate product with the agreement number F21040212 is tagged as "3", that is, the product label of the freight-rate data with the agreement number F21040212 is "3".

The freight-rate data with the same product label is divided into a group, that is, the freight-rate data 1, the freight-rate data 2, the freight-rate data 3, the freight-rate data 4, and the freight-rate data 5 with the agreement number F21052114 is divided into a group, that is, the freight-rate data 1, the freight-rate data 2, the freight-rate data 3, the freight-rate data 4, and the freight-rate data 5 are taken as the freight-rate data of the freight-rate product F21052114. The freight-rate data 6, the freight-rate data 7, and the freight-rate data 8 with the agreement number CA080516H is divided into a group, that is, the freight-rate data 6, the freight-rate data 7, and the freight-rate data 8 are taken as the freight-rate data of the freight-rate product CA080516H. The freight-rate data 9, the freight-rate data 10, freight-rate data 11, and the freight-rate data 12 with the agreement number F21040212 is divided into a group, that is, the freight-rate data 9, the freight-rate data 10, the freight-rate data 11, and the freight-rate data 12 are taken as the freight-rate data of the freight-rate product F21040212, as shown in Table (2).

Table (1):

| Freight-rate data set A | | | | | | |
|---|---|---|---|---|---|---|
| ID | Airline | Sales department | Agreement number | Origin | Destination | Price |
| 1 | CA | CGQ | F21052114 | CGQ | CAN | 1000 |
| 2 | CA | CGQ | F21052114 | CGQ | CAN | 1010 |
| 3 | CA | CGQ | F21052114 | CAN | CGO | 1020 |
| 4 | CA | CGQ | F21052114 | CAN | CGO | 1030 |

(continued)

| Freight-rate data set A | | | | | | |
|---|---|---|---|---|---|---|
| ID | Airline | Sales department | Agreement number | Origin | Destination | Price |
| 5 | CA | CGQ | F21052114 | CAN | CGO | 1030 |
| 6 | CA | CGQ | CA080516H | CGQ | CAN | 1040 |
| 7 | CA | CGQ | CA080516H | CGQ | CAN | 1050 |
| 8 | CA | CGQ | CA080516H | CGQ | HAK | 1060 |
| 9 | CA | CGQ | F21040212 | SHA | CAN | 1080 |
| 10 | CA | CGQ | F21040212 | CAN | SHA | 1090 |
| 11 | CA | CGQ | F21040212 | SHA | CAN | 1100 |
| 12 | CA | CGQ | F21040212 | CAN | SHA | 1110 |

Table (2):

| Airline CA | Freight-rate product F21052114 | Freight-rate data 1 |
|---|---|---|
| | | Freight-rate data 2 |
| | | Freight-rate data 3 |
| | | Freight-rate data 4 |
| | | Freight-rate data 5 |
| | Freight-rate product CA080516H | Freight-rate data 6 |
| | | Freight-rate data 7 |
| | | Freight-rate data 8 |
| | Freight-rate product F21040212 | Freight-rate data 9 |
| | | Freight-rate data 10 |
| | | Freight-rate data 11 |
| | | Freight-rate data 12 |

At step of S202, for the freight-rate data of each freight-rate product and a rule corresponding to the freight-rate data, analyzing the freight-rate data of the freight-rate product, to determine values of each feature of the freight-rate product.

It is to be noted that the implementation process of the step of S202 includes the following steps.

At step of S21, for the freight-rate data of each freight-rate product, acquiring a feature of the freight-rate product based on the freight-rate data of the freight-rate product and the rules corresponding to the freight-rate data.

In the step of S21, the number of feature is at least one.

In the implementation process of the step of S21, the rule corresponding to the freight-rate data in the rule data are first acquired from the prepared training set, i.e., the database, the freight-rate data is associated with the corresponding rule, and the feature of the freight-rate product is acquired from the freight-rate data and the rule corresponding to the freight-rate data.

It is to be noted that the training set mainly includes the freight-rate data, permission data, rule data, and route data.

The freight-rate data defines what to sell and how much to sell, mainly involving dimensions such as the airline, a sales time range, the origin, the destination, a shipping space, the price, and a freight-rate basis.

The permission data defines who to sell, mainly involving dimensions such as a channel, a group, a terminal configuration, and an agent account.

The rule data and the route data define how to sell, to whom, and when to sell, involving dimensions such as a passenger ID, a sales week, a combination condition, a flight, a transfer point, a stopover point, and the shipping space.

At step of S22, determining a quantity set corresponding to each value range of the feature of the freight-rate product based on the value range of the feature of the freight-rate product.

In the implementation process of the step of S22, the value range and cardinality of each feature of the freight-rate product are determined based on the number of values of each feature of the freight-rate product, the freight-rate product, the corresponding feature, and the value range are combined to form relevant data volumes, the number of data volumes is calculated, and the quantity set corresponding to each value range of the feature of the freight-rate product is determined.

It is to be noted that the freight-rate product S is a subset of the freight-rate data set A. When there are I freight-rate

$$\bigcup_{i=1}^{I} S_i = A$$

products, the value range of the feature $f_j$ of a certain freight-rate product $S_i \subseteq A$ and . The value range of the feature $f_j$ of the freight-rate product Si is recorded as $D_{ij}$, where $|D_{ij}|$ is the cardinality of the value range of the feature $f_j$ of the freight-rate product Si.

Wherein i is less than or equal to I, j is less than or equal to J, and J is the number of feature of the freight-rate product.

It is to be noted that $|D_{ij}|$=L, and the data set related to a certain value range $d_l$ of the feature $f_j$ of the freight-rate product $S_i$ is $\Delta(S_i, f_j, d_l)$. For the convenience of description, $\Delta(S_i, f_j, d_l)$ is simplified to $\Delta_{ij}$. For example, $|\Delta_{ij}|$ may be the data volume related to a certain value range $d_l$ of the feature $f_j$ of the freight-rate product $S_i$.

For example, the freight-rate product $S_i$ contains five pieces of freight-rate data, and a certain feature $S_i$ has two values, namely "1" and "2", the value range $D_{ij}$ of the feature $f_j$ of the freight-rate product $S_i$ is {1, 2}, and the cardinality $|D_{ij}|$ is 2. The freight-rate product $S_i$, the corresponding feature $f_j$, and the value range $D_{ij}$ are combined to form the relevant data volumes $|\Delta_{ij1}|$, $|\Delta_{ij2}|$... and $|\Delta_{ijL}|$, the number of data volumes is calculated, and the quantity set $Z_{ij}$ corresponding to each value range of the feature of the freight-rate product is determined, where $Z_{ij}=\{|\Delta_{ij1}|, |\Delta_{ij2}|...|\Delta_{ijL}|\}$.

For example, when there are three pieces of data with the feature $f_j$ of the freight-rate product $S_i$ being $d_j$="1", then $|\Delta_{ij1}|$ is 3.

At step of S23, calculating the quantity set of each value range of the feature to obtain the values of each feature of the freight-rate product.

In the implementation process of the step of S23, a standard deviation $\sigma_{ij}$ of the quantity set $Z_{ij}$ of each value range of the feature is first calculated, the standard deviation $\sigma_{ij}$ and the quantity set $Z_{ij}$ of each value range of the feature are substituted into formula (1), and the value $\tau_{ij}$ of each feature $f_j$ of the freight-rate product $S_i$ is calculated.

It is to be noted that when $\sigma_{ij}$=0, it indicates that the feature $f_j$ of the freight-rate product $S_i$ can group the data evenly, and the value thereof is set to the maximum value MaxValue. When $|D_{ij}|$=1, the feature $f_j$ of the freight-rate product $S_i$ has only one value and has no grouping ability, and the value thereof is set to 0.

In an embodiment, the valuable feature of a certain freight-rate product is taken as $\theta_i$, and $\theta_i$ can be expressed as $\theta_i=\{ f_j / \alpha\tau_{ij} \geq \lambda, i\in[1, I], j\in[1, n], |D_{ij}| > 1, f_j\in F\}$.

Wherein $\alpha$ is a constant coefficient, $\lambda$ is a value threshold, and $\alpha$ and $\lambda$ are 1 by default, and may also be customized to other values.

For example, the rule B corresponding to the freight-rate data set A in the rule data is acquired from the prepared training set, i.e., the database, the freight-rate data set A is associated with the corresponding rule B to form the following structured data, as shown in Table (3). The feature of the freight-rate product is acquired from twelve pieces of freight-rate data and the rule B corresponding to the freight-rate data. In an embodiment, the feature of the freight-rate product involves three features, namely, a team restriction, an advance sales restriction, and a weekly restriction.

For the freight-rate product F2105211, the $f_{team\ restriction}$ has two values, that is, five pieces of freight-rate data are divided into two groups, including two and three pieces of freight-rate data respectively. Based on the number of value ranges of the feature $f_{team\ restriction}$ of the freight-rate product, that is, at this time, the value range and cardinality of each feature of the freight-rate product may be calculated based on a pre-built mathematical model or a parameter calculation method, that is, the $|D_{team\ restriction}|$ is determined to be 2, and the $\sigma_{team\ restriction}$ is 0.5. The value calculated by formula (1) is 12.25.

Table (3):

| Freight-rate data set A | | | | | | | Rule | | |
|---|---|---|---|---|---|---|---|---|---|
| ID | Airline | Sales department | Agreement number | Origin | Destination | Price | Team restriction | Advance sales restriction | Weekly restriction |
| 1 | CA | CGQ | F21052114 | CGQ | CAN | 1000 | Team only | Unrestricted | Unrestricted |
| 2 | CA | CGQ | F21052114 | CGQ | CAN | 1010 | Team only | Unrestricted | Unrestricted |

(continued)

| Freight-rate data set A | | | | | | | Rule | | |
|---|---|---|---|---|---|---|---|---|---|
| ID | Airline | Sales department | Agreement number | Origin | Destination | Price | Team restriction | Advance sales restriction | Weekly restriction |
| 3 | CA | CGQ | F21052114 | CAN | CGO | 1020 | Unrestricted | At least two days in advance | Unrestricted |
| 4 | CA | CGQ | F21052114 | CAN | CGO | 1030 | Unrestricted | At least two days in advance | Unrestricted |
| 5 | CA | CGQ | F21052114 | CAN | CGO | 1030 | Unrestricted | At least seven days in advance | Unrestricted |
| 6 | CA | CGQ | CA080516H | CGQ | CAN | 1040 | Unrestricted | At least five days in advance | Unrestricted |
| 7 | CA | CGQ | CA080516H | CGQ | CAN | 1050 | Only for individual traveler | Restricted | Unrestricted |
| 8 | CA | CGQ | CA080516H | CGQ | HAK | 1060 | Unrestricted | Unrestricted | Unrestricted |
| 9 | CA | CGQ | F21040212 | SHA | CAN | 1080 | Only for individual traveler | Unrestricted | Weekend |
| 10 | CA | CGQ | F21040212 | CAN | SHA | 1090 | Only for individual traveler | Unrestricted | Working Day |
| 11 | CA | CGQ | F21040212 | SHA | CAN | 1100 | Only for individual traveler | Unrestricted | Working Day |
| 12 | CA | CGQ | F21040212 | CAN | SHA | 1110 | Unrestricted | At least three days in advance and at most seven days in advance | Monday, Wednesday, Friday |

At step of S203, based on the values of each feature, determining whether the value satisfying the preset threshold exists, and when the value greater than or equal to the preset threshold exists in the values of each feature, step of S204 to step of S206 are executed, and when the value satisfying the preset threshold does not exist, the value is discarded.

It is to be noted that the implementation process of the step of S203 includes the following steps.

At step of S31, determining whether a value greater than or equal to the preset threshold exists in the values of each feature, when the value greater than or equal to the preset threshold exists in the values of each feature, the step of S204 to the step of S206 are executed, and when the value satisfying the preset threshold does not exist, the value is discarded.

In the implementation process of the step of S31, it is determined whether the value greater than or equal to the preset threshold exists in the values of each feature, that is, each valuable feature is screened out from each feature, when the value greater than or equal to the preset threshold exists in the values of each feature, the step of S204 to the step of S206 are executed, and when the value satisfying the preset threshold does not exist, the value is discarded.

It is to be noted that the preset threshold is set in advance based on actual conditions, for example, it may be set to a positive integer greater than or equal to 1.

At step of S204, taking a feature corresponding to the value satisfying the preset threshold as a decision feature.

In the implementation process of the step of S204, each valuable feature screened out is taken as the decision feature.

Based on the content shown in the step of S203 and the step of S204, an example is described below.

For example, based on the content shown in Table (3), it is determined that $|D_{team\ restriction}|$ is 2, $\sigma_{team\ restriction}$ is 0.5, the value calculated by formula (1) is 12.25, and the value of $f_{team\ restriction}$ is greater than the preset threshold 1.

$f_{team\ restriction}$ is selected as the decision feature. Similarly, $f_{Advance\ sales\ restriction}$ may be selected as the decision feature. However, $f_{weekly\ restriction}$ does not have the ability to distinguish data, so that it cannot be taken as the decision feature. Therefore, the decision feature set of the freight-rate product F21052114 is $\{f_{team\ restriction}, f_{advance\ sales\ restriction}\}$.

By analogy, the decision feature set of the freight-rate product CA080516H is $\{f_{team\ restriction}, f_{advance\ sales\ restriction}\}$, and the decision feature set of the freight-rate product F21040212 is $\{f_{team\ restriction}, f_{advance\ sales\ restriction}, f_{weekly\ restriction}\}$.

At step of S205, determining freight-rate products of the same product type, and aggregating the freight-rate products of the same product type.

It is to be noted that the implementation process of the step of S205 includes the following steps.

At step of S41, comparing each decision feature of each freight-rate product, and when the freight-rate products with the same decision features exist, taking the freight-rate products with the same decision features as the freight-rate products of the same product type.

In the implementation process of the step of S41, within the same airline, the decision features of all the freight-rate products are compared and matched, and the freight-rate products with the same decision features are merged into one product type.

At step of S42, aggregating the freight-rate products of the same product type

In the implementation process of the step of S42, the freight-rate products merged into the same product type are aggregated, so that there are a plurality of freight-rate products of the product type and the freight-rate data of the freight-rate products.

For example, based on the content shown in Table (2) and the content shown in S103 and S104, the decision feature set of the freight-rate product F21052114 is determined to be $\{f_{team\ restriction}, f_{advance\ sales\ restriction}\}$, the decision feature set of the freight-rate product CA080516H is determined to be $\{f_{team\ restriction}, f_{advance\ sales\ restriction}\}$, and the decision feature set of the freight-rate product F21040212 is determined to be $\{f_{team\ restriction}, f_{advance\ sales\ restriction}, f_{weekly\ restriction}\}$. Within the same airline CA, the decision features of all the freight-rate products are compared and matched, and it is determined that the freight-rate product F21052114 and the freight-rate product CA080516H have the same decision feature set $\{f_{team\ restriction}, f_{advance\ sales\ restriction}\}$, so that the two freight-rate products may be merged into one product type. Finally, the following structure is formed, as shown in Table (4), and a corresponding product feature set matrix may be generated and stored.

Table (4):

| Airline CA | Product type 1 | Freight-rate product F21052114 | Freight-rate data 1 |
| --- | --- | --- | --- |
| | | | Freight-rate data 1 |
| | | | Freight-rate data 3 |
| | | | Freight-rate data 4 |
| | | | Freight-rate data 5 |
| | | Freight-rate product CA080516H | Freight-rate data 6 |
| | | | Freight-rate data 7 |
| | | | Freight-rate data 8 |
| | Product type 2 | Freight-rate product F21040212 | Freight-rate data 9 |
| | | | Freight-rate data 10 |
| | | | Freight-rate data 11 |
| | | | Freight-rate data 12 |

At step of S206, generating analysis reports corresponding to the freight-rate products of the same product type by processing a feature set of all the freight-rate products of the same product type and the freight-rate data of all the freight-rate products of the same product type.

In the implementation process of step of S206, the origin and destination of each piece of freight-rate data of the same product type, and the origin and destination with a high proportion in the product type, i.e., a popular route, are counted; and a popular route product definition mode is determined based on the decision features of all the freight-rate products of the product type, and then a corresponding freight-rate product analysis report is generated, so that the airline can quickly adjust the route and the freight-rate data.

For example, based on the content shown in Table (4), the product type 1 includes the freight-rate product F21052114 and the freight-rate product CA080516H, which contains eight pieces of freight-rate data in total. Considering the order of the freight-rate origin and destination, a city pair with seven pieces of freight-rate data is CGQ (Changchun) and CAN (Guangzhou), and a city pair with one piece of freight-rate data is CGQ (Changchun) and HAK (Haikou). Therefore, the hot route of the airline product type 1 is Changchun to Guangzhou (or vice versa), and the decision feature set of this product is $\{f_{team\ restriction}, f_{advance\ sales\ restriction}\}$. Therefore, it may be determined that the freight-rate product of this hot route is mainly defined by "team restriction" and "advance sales restriction". Similarly, it may be deduced that "airline product type 2" is mainly defined by "team restriction", "advance sales restriction" and "weekly restriction". Based on the above analysis, the corresponding freight-rate product analysis report is generated, so that the airline can quickly adjust the route and the freight-rate data.

In an embodiment, the implementation process of the step of S201 to S206 may be implemented in the form of a mathematical model.

In the embodiments of the present invention, the decision features of different freight-rate products are calculated from data in the training set such as the freight-rate data set by feature extraction in pattern recognition; and the freight-rate products of the same product type are determined, and the freight-rate products of the same product type are aggregated. Therefore, key functional points of the freight-rate products of different product types and potential business intentions of the freight-rate product definitions are analyzed. The method can complete data processing within a specified time, thereby increasing the speed of processing and analysis speed, and enabling accurate data analysis.

The embodiments of the present invention further disclose an electronic device, configured to run a database storage process. The data processing method disclosed in Fig. 2 is performed when running the database storage process.

The embodiments of the present invention further disclose a computer storage medium, which includes a database storage process. The database storage process, when running, controls a device where the storage medium is located to perform the data processing method disclosed in Fig. 2.

In the context of the present invention, the computer storage medium may be a tangible medium that may contain or store a program for use by or in conjunction with an instruction execution system, apparatus, or device. A machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More examples of the machine-readable storage medium may include an electrical connection with at least one line, a portable computer disk, a hard disk, a Random Access Memory (RAM), a Read-Only Memory (ROM), an Erasable Programmable ROM (EPROM or a flash memory), an optical fiber, a Compact Disc ROM (CD-ROM), an optical storage device, a magnetic storage device, or any suitable combination thereof.

The various embodiments in the present specification are described in a progressive manner, the same similar parts between the various embodiments can be referred to each other, and each embodiment focuses on differences from other embodiments. In particular, for the system or system embodiments, since it is basically similar to the method embodiment, the description is relatively simple, and the relevant parts can be referred to the partial description of the method embodiment. The system and system embodiments described above are merely schematic, in which the units described as separate components may or may not be physically separated. The components displayed as units may or may not be physical units, that is, the components may be located in one place, or may be distributed on the plurality of network units. Part or all of the modules may be selected based on actual requirements to achieve the purposes of the solutions of this embodiment. Those of ordinary skill in the art may understand and implement without creative efforts.

Professionals may realize that the units and algorithm steps of each example described in combination with the embodiments disclosed in the present invention may be implemented by electronic hardware, computer hardware or a combination of computer software and the electronic hardware. In order to clearly illustrate the interchangeability of hardware and software, the composition and steps of each example have been described in general terms of function in the above description. Whether these functions are executed in a hardware or software manner depends on specific applications and design constraints of the technical solutions. Professionals may realize the described functions for each specific application by use of different methods, but such realization shall fall within the scope of the present invention.

The above description of the disclosed embodiments enables those skilled in the art to implement or use the present invention. Various modifications to these embodiments will be apparent to those skilled in the art, and the general principles defined herein may be implemented in other embodiments without departing from the spirit or scope of the present invention. Therefore, the present invention will not be limited to the embodiments shown herein, but is within the widest scope consistent with the principles and novel features disclosed herein.

**Claims**

1. A data processing method, comprising:

   determining freight-rate data corresponding to each freight-rate product by processing a freight-rate data set and product basic information in a freight-rate system, wherein the product basic information comprises a product definition and product attributes;
   for the freight-rate data of each freight-rate product and a rule corresponding to the freight-rate data, analyzing the freight-rate data of the freight-rate product, to determine values of each feature of the freight-rate product;
   determining a value satisfying a preset threshold based on the values of each feature;
   taking a feature corresponding to the value satisfying the preset threshold as a decision feature;
   determining freight-rate products of the same product type, and aggregating the freight-rate products of the same product type; and
   generating analysis reports corresponding to the freight-rate products of the same product type by processing a feature set of all the freight-rate products of the same product type and the freight-rate data of all the freight-rate products of the same product type.

2. The method as claimed in claim 1, wherein the determining freight-rate data corresponding to each freight-rate product by processing a freight-rate data set and product basic information in a freight-rate system comprises:

   tagging a product label of each piece of freight-rate data in the freight-rate data set based on a field of a product definition in the product basic information; and
   determining the freight-rate data corresponding to each freight-rate product by performing classification processing on each piece of freight-rate data in the freight-rate data set based on the product label and the product attributes of the product basic information.

3. The method as claimed in claim 1, wherein the for the freight-rate data of each freight-rate product and a rule corresponding to the freight-rate data, analyzing the freight-rate data of the freight-rate product, to determine values of each feature of the freight-rate product comprises:

   for the freight-rate data of each freight-rate product, acquiring a feature of the freight-rate product based on the freight-rate data of the freight-rate product and the rule corresponding to the freight-rate data, wherein the number of the feature is at least one;
   determining a quantity set of each value range of the feature based on a value range of the feature; and
   calculating the quantity set of each value range of the feature to obtain the values of each feature of the freight-rate product.

4. The method as claimed in claim 1, wherein the determining a value satisfying a preset threshold based on the values of each feature comprises:

   determining whether a value greater than or equal to the preset threshold exists in values of each feature; and
   when the value greater than or equal to the preset threshold exists in the values of each feature, executing the step of taking the feature corresponding to the value satisfying the preset threshold as the decision feature.

5. The method as claimed in claim 1, wherein the determining freight-rate products of the same product type, and aggregating the freight-rate products of the same product type comprises:

   comparing each decision feature of each freight-rate product, and when freight-rate products with the same decision features exist, taking the freight-rate products with the same decision features as the freight-rate products of the same product type; and
   aggregating the freight-rate products of the same product type.

6. A data processing system, comprising:

a product classification assembly, configured to determine freight-rate data corresponding to each freight-rate product by processing a freight-rate data set and product basic information in a freight-rate system, wherein the product basic information comprises a product definition and product attributes;

a feature extraction assembly, configured to, for the freight-rate data of each freight-rate product and a rule corresponding to the freight-rate data, analyze the freight-rate data of the freight-rate product, to determine values of each feature of the freight-rate product; determine a value satisfying a preset threshold based on the values of each feature; and take a feature corresponding to the value satisfying the preset threshold as a decision feature;

a product clustering assembly, configured to determine freight-rate products of the same product type, and aggregate the freight-rate products of the same product type; and

a business model analysis assembly, configured to generate analysis reports corresponding to the freight-rate products by processing a feature set of all the freight-rate products of the same product type and the freight-rate data of all the freight-rate products of the same product type.

7. The system as claimed in claim 6, wherein the product classification assembly comprises a product marking module, a product grouping module, and a product family construction module;

the product marking module, configured to tag a product label of each piece of freight-rate data in the freight-rate data set based on a field of a product definition in the product basic information; and

the product grouping module and the product family construction module, configured to determine the freight-rate data corresponding to each freight-rate product by performing classification processing on each piece of freight-rate data in the freight-rate data set based on the product label and the product attributes of the product basic information.

8. The system as claimed in claim 6, wherein the product clustering assembly comprises a feature matching module and a product merging module;

the feature matching module, configured to compare each decision feature of each freight-rate product, and when the freight-rate products with the same decision features exist, take the freight-rate products with the same decision features as the freight-rate products of the same product type; and

the product merging module, configured to aggregate the freight-rate products of the same product type.

9. An electronic device, configured to run a program, wherein the program, when running, performs the data processing method according to any one of claims 1 to 5.

10. A computer storage medium, comprising a stored program, wherein the program, when running, controls a device where the storage medium is located to perform the data processing method according to any one of claims 1 to 5.

Product classification assembly 10

Product marking module 11

Product grouping module 12

Product family construction module 13

Feature extraction assembly 20

Data integration 21

Feature value analysis module 22

Decision determination module 23

Product clustering assembly 30

Feature matching module 31

Product merging module 32

Product feature set matrix

Business model analysis assembly 40

Product information extraction module 41

Product definition module 42

Product statistics module 43

Training set

Freight-rate data

Permission data

Rule data

Route data

Fig. 1

Determine freight-rate data corresponding to each freight-rate product by processing a freight-rate data set and product basic information in a freight-rate system ⟩ S201

For the freight-rate data of each freight-rate product and rules corresponding to the freight-rate data, analyze the freight-rate data of the freight-rate product, to determine values of each feature of the freight-rate product ⟩ S202

Based on the values of each feature, determine whether a value satisfying the preset threshold exists ⟩ S203

Yes

Take a feature corresponding to the value satisfying the preset threshold as a decision feature ⟩ S204

Determine freight-rate products of the same product type, and aggregate the freight-rate products of the same product type ⟩ S205

generate analysis reports corresponding to the freight-rate products of the same product type by processing a feature set of all the freight-rate products of the same product type and the freight-rate data of all the freight-rate products of the same product type ⟩ S206

Fig. 2

## INTERNATIONAL SEARCH REPORT

| International application No. |
| --- |
| **PCT/CN2023/112558** |

| A. | CLASSIFICATION OF SUBJECT MATTER |
| --- | --- |

G06Q 30/02(2023.01)i; G06Q 50/30(2012.01)i

According to International Patent Classification (IPC) or to both national classification and IPC

| B. | FIELDS SEARCHED |
| --- | --- |

Minimum documentation searched (classification system followed by classification symbols)

IPC: G06Q

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 运价产品, 运价数据, 数据集, 航空公司, 航司, 分析, 销售策略, 产品属性, 产品标签, 目的地, 舱位, 价格, 航班, 合并, 聚合, 特征提取, 机票, 定价, 分析报告, 刘辉, 李亮, 阎松柏, 朱先昊, 王新红, 史晓菲, 刘佳瑞, 郭画, price, strategy, airline, fare, data set, analysis, sale, product, feature, extract, merge, combine, aggregate, Liu Hui, Li Liang, Yan Songbai, Yan Songbo, Zhu Xianhao, Wang Xinhong, Shi Xiaofei, Liu Jiarui, Guo Hua

| C. | DOCUMENTS CONSIDERED TO BE RELEVANT | |
| --- | --- | --- |
| Category* | Citation of document, with indication, where appropriate, of the relevant passages | Relevant to claim No. |
| PX | CN 115409549 A (TRAVELSKY TECHNOLOGY LIMITED) 29 November 2022 (2022-11-29) claims 1-10 | 1-10 |
| A | US 8615422 B1 (AMERICAN AIRLINES, INC.) 24 December 2013 (2013-12-24) description, columns 1-5 | 1-10 |
| A | CN 107451872 A (TRAVELSKY TECHNOLOGY LIMITED) 08 December 2017 (2017-12-08) entire document | 1-10 |
| A | CN 105654338 A (TRAVELSKY TECHNOLOGY LIMITED) 08 June 2016 (2016-06-08) entire document | 1-10 |
| A | CN 109978619 A (CTRIP TRAVEL NETWORK TECHNOLOGY (SHANGHAI) CO., LTD.) 05 July 2019 (2019-07-05) entire document | 1-10 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 October 2023** | **24 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/112558** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2015310570 A1 (DUETTO RESEARCH, INC.) 29 October 2015 (2015-10-29)<br>       entire document | 1-10 |
| A | 王文芳 等(WANG, Wenfang et al.). "基于差异化服务收益理念的航空公司品牌运价体系战略研究 (Non-official translation: Research on Airline Brand Freight Price System Strategic Based on Differentiated Service Revenue Concept)"<br>*中国管理信息化 (China Management Informationization)*,<br>Vol. 22, No. 14, 31 July 2019 (2019-07-31),<br>       pages 106-107 | 1-10 |

**INTERNATIONAL SEARCH REPORT**
Information on patent family members

International application No.

**PCT/CN2023/112558**

| Patent document cited in search report | | | Publication date (day/month/year) | Patent family member(s) | Publication date (day/month/year) |
|---|---|---|---|---|---|
| CN | 115409549 | A | 29 November 2022 | None | |
| US | 8615422 | B1 | 24 December 2013 | None | |
| CN | 107451872 | A | 08 December 2017 | None | |
| CN | 105654338 | A | 08 June 2016 | None | |
| CN | 109978619 | A | 05 July 2019 | None | |
| US | 2015310570 | A1 | 29 October 2015 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211014877